# EUROPÄISCHE PATENTANMELDUNG

(11) **EP 2 942 739 A1**
(43) Veröffentlichungstag der Anmeldung: **11.11.2015**
(21) Anmeldenummer: 14179146.7
(22) Anmeldetag: 30.07.2014
(51) Int. Cl.: G06K 19/077, G09F 3/08, G09F 7/18

(54) **Halterung für RFID-Transponder, RFID-Transponder und Betätigungswerkzeug**

(30) Priorität: 07.05.2014 DE 202014003777 U
(71) Anmelder: Siemens Aktiengesellschaft, 80333 München (DE)
(72) Erfinder: Kube, Roland, 90513 Zirndorf (DE); Müller, Klaus, 96178 Pommersfelden (DE); Stadelmann, Bernd, 91349 Egloffstein (DE)

(57) **Zusammenfassung**

Die Erfindung betrifft eine Vorrichtung (H) zur reversiblen Aufnahme eines RFID-Transponders (TR), wobei der RFID-Transponder (TR) durch die Vorrichtung (H) formschlüssig zu befestigen ist. Die Vorrichtung (H) weist dabei eine im Wesentlichen zylinderförmige Vertiefung zur Aufnahme des im Wesentlichen scheibenförmigen oder zylindrischen RFID-Transponders (TR) auf, wobei in der Außenwand der zylindrischen Vertiefung mehrere, insbesondere drei Aussparungen vorgesehen sind, die zum Zusammenwirken mit mehreren, insbesondere drei Haltenasen des RFID-Transponders (TR) ausgebildet sind, wobei ein in die Vorrichtung (H) eingeführter RFID-Transponder (TR) durch eine Verdrehung gegenüber der Vorrichtung (H) In dieser nach Art eines Bajonettverschlusses arretierbar ist. Die Erfindung betrifft außerdem einen für die Vorrichtung vorgesehenen RFID-Transponder und ein passendes Betätigungswerkzeug.

## Beschreibung

Die Erfindung betrifft eine Vorrichtung zur reversiblen Ausnahme eines RFID-Transponders gemäß dem Obergriff des Patentanspruchs 1, einen RFID-Transponder gemäß dem Obergriff des Patentanspruchs 5, und ein Betätigungswerkzeug zur Befestigung und / oder Entnahme des RFID-Transponders gemäß Patentanspruch 3.

Bei zahlreichen Anwendungen in Industrie und Handel werden RFID-Transponder zur Identifizierung von Waren und Werkstücken eingesetzt. Bei vielen Anwendungen werden diese Transponder auf das zu identifizierende Gut geklebt. Eine Alternative besteht darin, den Transponder mittels einer Verschraubung zu befestigen, was insbesondere dann vorteilhaft ist, wenn der Transponder später wieder zerstörungsfrei entfernt werden soll. Dies betrifft insbesondere Anwendungen in automatisierten Produktionslinien, z.B im Automobilbau, wo Werkstücke, beispielsweise Roh-Karossen oder deren Träger (Skids) maschinenlesbar gekennzeichnet werden sollen.

Insbesondere beim zuletzt genannten Anwendungsfall in der Automobilindustrie müssen die Transponder derart in die Werkstücke oder daran befestigte Halterungen eingebracht werden, dass sie einerseits rüttelfest verankert sind, andererseits aber auch wieder leicht entnehmbar sind. Obwohl sich dazu in erster Linie eine Befestigung mittels einer Verschraubung und dazu mittels einer Befestigungsbohrung im Transponder etabliert hat, ist dies bei bestimmten Bauformen (kompakte Größe) der Transponder aufgrund der Lage des integrierten Chips und der integrierten Antenne nicht möglich.

Es ist also eine Aufgabe der vorliegenden Erfindung, eine alternative Lösung zur reversiblen Befestigung von Transpondern anzugeben, wobei der Transponder rüttelfest verankert ist und dennoch leicht entnehmbar ist.

Zur Lösung der Aufgabe wird vorgeschlagen, den RFID-Transponder mittels eines Bajonettschlusses in einer entsprechend ausgearbeiteten Aufnahme im Werkstück (integrierte Vorrichtung) oder einer entsprechenden separaten Vorrichtung (Halterung)zu verankern, wobei gleichzeitig ein passendes Betätigungswerkzeug, auch Entnahmewerkzeug genannt, vorgesehen wird. Vorzugsweise ist in dem Werkstück beziehungsweise der Vorrichtung oder direkt am Transponder eine Feder integriert, die gegen den Transponder / die Vorrichtung drückt, so dass ein ungewolltes Lösen des Transponders aus dem Bajonettverschluß verhindert wird und eine rüttelfeste Befestigung und eine Stoßabsorption gegeben ist. Zudem erleichtert die Feder eine Entnahme des Transponders nach dem Lösen des Bajonettverschlusses. In einer vorteilhaften Ausgestaltung kann das Entnahmewerkzeug auch einen integrierten Magneten umfassen, der den Transponder bei der Entnahme aus dem Werkstück am Entnahmewerkzeug sichert und damit die Entnahme des Transponders aus dem Werkstück bzw. Halterung vereinfacht; dies verhindert also auch einen versehentlichen Sturz des Transponders. In einfachen Fällen kann entweder eine Feder oder ein Magnet zur einfacheren Entnahme vorgesehen sein; im Idealfall werden gleichzeitig beide Hilfsmittel vorgesehen.

Die Aufgabe wird insbesondere durch die in den Patentansprüchen angegebene Vorrichtung zur Aufnahme eines RFID-Transponders, den dort ebenso angegebenen RFID-Transponder und das dort angegebene Betätigungswerkzeug gelöst.

In den abhängigen Patentansprüchen sind dabei vorteilhafte Ausgestaltungen angegeben.

Vorteilhaft ist in der zylinderförmigen Vertiefung eine Feder, insbesondere eine Schraubenfeder derart angeordnet, dass diese den RFID-Transponder gegen die Richtung seiner Einführung aus der Vorrichtung herausdrückt. Diese Feder dient vorteilhaft nicht nur einer einfachen Entnahme, sondern auch einer Schock-Absorption bei Stößen oder Vibrationen.

Ein erfindungsgemäßer RFID-Transponder ist zur Verbindung mit einer zuvor beschriebenen Vorrichtung ausgestaltet, wobei der RFID-Transponder im Wesentlichen zylinderförmig oder scheibenförmig ausgestaltet ist und an seiner Außenkante mehrere, insbesondere drei Haltenasen zum Zusammenwirken mit den entsprechenden Aussparungen der Vorrichtung aufweist. In einer vorteilhaften Ausgestaltung weist der RFID-Transponder an seiner Stirnseite zumindest eine Vertiefung zum Zusammenwirken mit einem Mitnehmer eines Betätigungswerkzeuges auf.

Vorzugsweise besteht der RFID-Transponder zumindest an einer dem Betätigungswerkzeug zuzuwendenden Seite aus ferromagnetischem Material; dies gilt vor allem für magnetisch gekoppelte HF-RFID-Transponder. Elektromagnetisch gekoppelte UHF-RFID-Transponder weisen dagegen vorzugsweise einen im montierten Zustand nach außen weisenden Gehäuse-Teil aus Kunststoff oder dgl. auf, um eine Transmission zu ermöglichen.

Vorteilhaft ist das ferromagnetische Material derart geformt, dass ein von außen auf den RFID-Transponder einwirkendes magnetisches Wechselfeld zumindest teilweise durch eine im inneren des RFID-Transponders angeordneten Spule geleitet wird. Somit dient dieser ferromagnetische Teil des Gehäuses nicht nur dem Zusammenwirken mit einem Magneten des Entnahmewerkzeugs, sondern auch der Leitung des magnetischen Flusses durch eine Sende-/Empfangsspule der Transponder-Elektronik.

Das passende Betätigungswerkzeug zur Befestigung und / oder Entnahme eines RFID-Transponders aus einer Vorrichtung weist vorteilhaft zumindest einen Mitnehmer zum Eingreifen in zumindest eine Vertiefung des RFID-Transponders auf, wobei der oder die Mitnehmer derart angeordnet ist oder sind, dass ein Verdrehen des RFID-Transponders mittels des Betätigungswerkzeuges zur Arretierung oder zum Lösen aus der Vorrichtung durchführbar ist. Vorteilhaft weist das Betätigungswerkzeug außerdem einen Permanent-Magneten zur Entnahme des RFID-Transponders aus der Vertiefung der Vorrichtung auf.

Ausführungsbeispiele der erfindungsgemäßen Vorrichtung zur Aufnahme eines RFID-Transponders, eines erfindungsgemäßen RFID-Transponders und eines erfindungsgemäßen Betätigungswerkzeuges werden nachfolgend anhand der Zeichnungen erläutert.

Dabei zeigen:
- Figur 1: eine perspektivische Darstellung einer Anordnung mit der Vorrichtung und mit einem erfindungsgemäßen RFID-Transponder,
- Figur 2: die Anordnung aus einer zweiten Perspektive,
- Figur 3: eine Schnittzeichnung der Vorrichtung mit montiertem Transponder,
- Figur 4: eine schematische Draufsicht der Vorrichtung mit eingesetztem RFID-Transponder, und
- Figur 5: eine Skizze des erfindungsgemäßen Betätigungswerkzeuges.

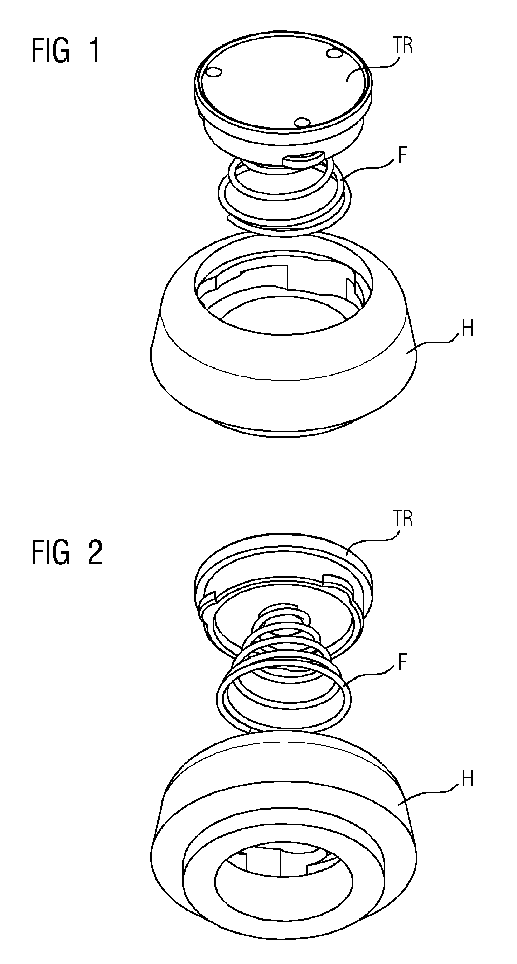

In der Figur 1 ist perspektivisch die Vorrichtung H (Halterung) mit einer Vertiefung zur Aufnahme des ebenfalls dargestellten scheibenförmigen RFID-Transponders gezeigt. In dieser Darstellung ist die optionale Feder F separat dargestellt; in einer bevorzugten Ausführungsform ist diese in die Vorrichtung H so eingesetzt, dass sie im unteren Bereich der Vertiefung eingebracht ist und durch die Vorrichtung gehalten wird. Alternativ kann die Feder F auch Bestandteil des RFID-Transponders TR sein, oder auch ganz entfallen.

Die Figur 2 zeigt die Anordnung aus Figur 1 aus einer anderen Perspektive.

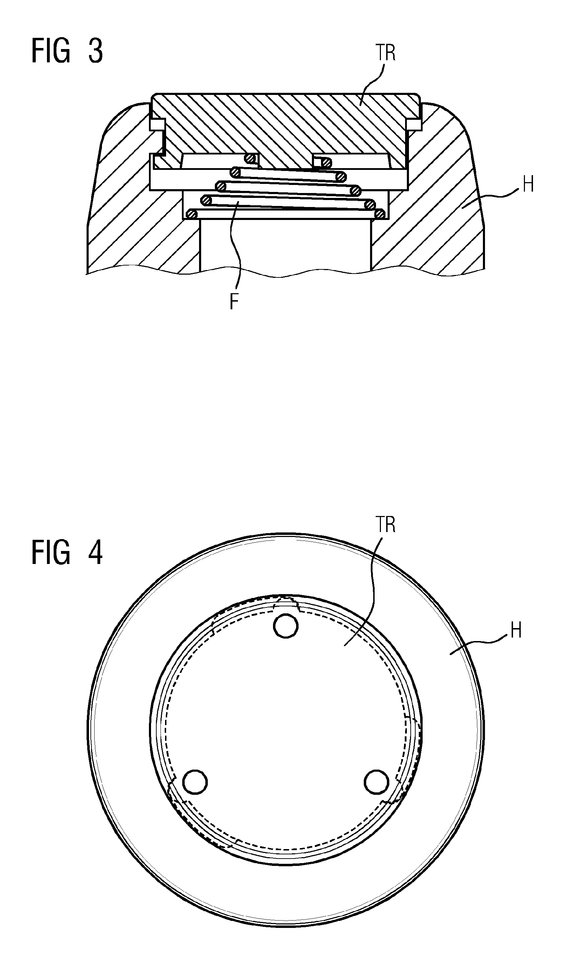

Die Figur 3 zeigt die Vorrichtung H mit eingesetztem Transponder TR und die Feder F in einer Schnittdarstellung.

Die Figur 4 zeigt die Vorrichtung H in einer Draufsicht mit eingebautem RFID-Transponder TR. Dabei ist zu erkennen, dass für die Haltenasen des Transponders in der Innenwand der Vorrichtung H Hinterschnitte eingearbeitet (z.B. gefräst) sind, die nach einer Verdrehung des in die Vertiefung eingedrückten RFID-Transponders eine formschlüssige Verbindung der beiden Bauteile bewirken. Diese Hinterschnitte können an ihren der Oberseite der Vorrichtung H zugewandten Flächen jeweils eine Vertiefung aufweisen, in die die Haltenasen des RFID-Transponders TR nach der Montage aufgrund der Federkraft der Feder F eingreifen, so dass der RFID-Transponder TR einrastet und zur Entnahme gegen die Kraft der Feder F in die Vorrichtung H eingerückt werden muss, um somit ein Zurückdrehen des RFID-Transponders TR wieder zu ermöglichen. Dadurch wird die Anordnung "rüttelfest"; ein selbsttätiges Verdrehen und damit ungewolltes Lösen des RFID-Transponders TR wird somit verhindert.

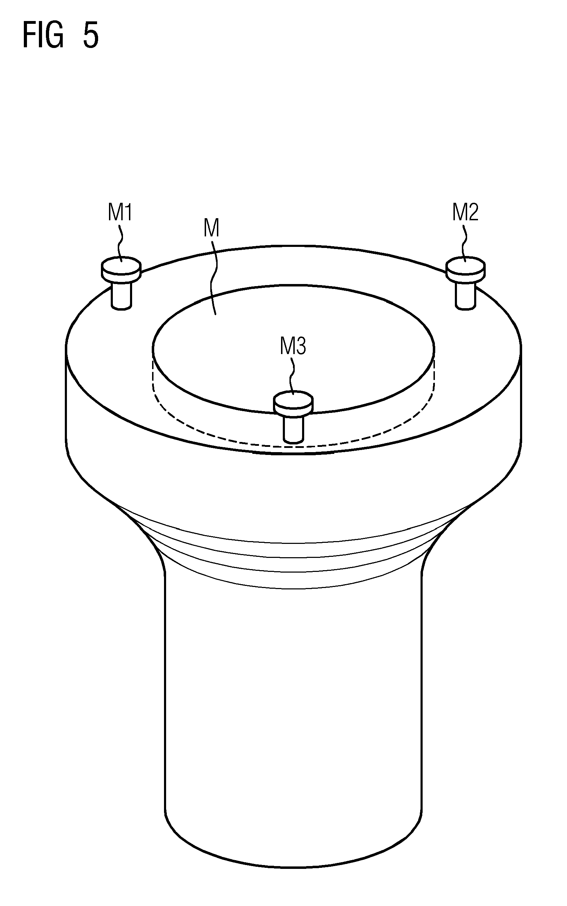

Die Figur 5 zeigt ein Betätigungswerkzeug mit den Mitnehmern M1, M2, M3, die zum Eingreifen in entsprechende Vertiefungen des RFID-Transponders vorgesehen sind. Damit kann nach Aufsetzen des Werkzeuges auf den RFID-Transponder TR und dem ggf. notwendigen eindrücken dessen in die Vertiefung der Vorrichtung H das zum Verdrehen (ein- und ausrasten) des RFID-Transponders TR notwendige Drehmoment sicher übertragen werden. In einer vorteilhaften Ausgestaltung weisen die Mitnehmer eine Verdickung, Ausbuchtung oder Einkerbung auf, die mit dem RFID-Transponder TR bzw. dessen Vertiefungen verhaken und damit ein Herausziehen des RFID-Transponders TR aus der Vertiefung der Vorrichtung H ermöglichen und außerdem ein Herabfallen des RFID-Transponders TR nach der Entnahme oder vor der Montage verhindern.

In der Mitte der dem RFID-Transponder zuzuwendenden Seite des Betätigungswerkzeuges ist ein optional vorzusehender Magnet M skizziert, der alternativ oder zusätzlich zu den genannten Ausgestaltungen der Mitnehmer eine einfache Entnahme des RFID-Transponders TR aus der Vorrichtung H ermöglicht und ebenso ein ungewolltes "Fallen" des entnommenen RFID-Transponders TR verhindert; er wirkt mit dem metallischen oder ferromagnetischen Gehäuse / Gehäuseteil des RFID-Transponders zusammen.

Obwohl in den Skizzen die Vertiefung der Vorrichtung H entsprechende Aussparungen / Hinterschnitte und der RFID-Transponder TR entsprechende Haltenasen zum Zusammenwirken mit den Aussparungen bzw. Hinterschnitte zeigt, können alternativ umgekehrt die Aussparungen auch am RFID-Transponder TR und entsprechend die Haltenasen an der Vorrichtung H vorgesehen sein. Analog dazu können auch die Mitnehmer am Betätigungswerkzeug und die entsprechenden Vertiefungen am RFID-Transponder vertauscht sein.

## Patentansprüche

1. Vorrichtung (H) zur reversiblen Aufnahme eines RFID-Transponders (TR),
wobei der RFID-Transponder (TR) durch die Vorrichtung (H) formschlüssig zu befestigen ist,
**gekennzeichnet durch**
eine im Wesentlichen zylinderförmige Vertiefung zur Aufnahme des im Wesentlichen scheibenförmigen oder zylindrischen RFID-Transponders (TR), wobei in oder an der Außenwand der zylindrischen Vertiefung mehrere, insbesondere drei Aussparungen oder Haltenasen vorgesehen sind, die zum Zusammenwirken mit mehreren, insbesondere drei Haltenasen oder Vertiefungen des RFID-Transponders ausgebildet sind, wobei ein in die Vorrichtung eingeführter RFID-Transponder (TR) **durch** eine Verdrehung gegenüber der Vorrichtung (H) in dieser nach Art eines Bajonettverschlusses arretierbar ist.

2. Vorrichtung (H) nach Patentanspruch 1,
**dadurch gekennzeichnet,**
**dass** in der zylinderförmigen Vertiefung eine Feder, insbesondere eine Schraubenfeder derart angeordnet ist, dass diese den RFID-Transponder (TR) gegen die Richtung seiner Einführung aus der Vorrichtung (H) herausdrückt.

3. Betätigungswerkzeug zur Befestigung und / oder Entnahme eines RFID-Transponders (TR) aus einer Vorrichtung (H) gemäß Patentanspruch 1 oder 2,
**gekennzeichnet durch**
zumindest einen Mitnehmer (M1, M2, M3) zum Eingreifen in zumindest eine Vertiefung des RFID-Transponders, wobei der oder die Mitnehmer (M1, M2, M3) derart angeordnet ist oder sind, dass ein Verdrehen des RFID-Transponders (TR) mittels des Betätigungswerkzeuges zur Arretierung oder zum Lösen aus der Vorrichtung (H) durchführbar ist.

4. Betätigungswerkzeug nach Patentanspruch 3,
**gekennzeichnet durch**
einen Permanent-Magneten zur Entnahme des RFID-Transponders (TR) aus der Vertiefung (VT) der Vorrichtung (H).

5. RFID-Transponder (TR) zur Verbindung mit einer Vorrichtung (H) gemäß Patentanspruch 1 oder 2,
**dadurch gekennzeichnet**,
das der RFID-Transponder (TR) im Wesentlichen zylinderförmig oder scheibenförmig ausgestaltet ist und an seiner Außenkante mehrere, insbesondere drei Haltenasen zum Zusammenwirken mit den entsprechenden Aussparungen der Vorrichtung (H) aufweist.

6. RFID-Transponder (TR) nach Patentanspruch 5,
**dadurch gekennzeichnet,**
**dass** der RFID-Transponder (TR) an seiner Stirnseite zumindest eine Vertiefung zum Zusammenwirken mit einem Mitnehmer (M1, M2, M3) eines Betätigungswerkzeuges aufweist.

7. RFID-Transponder (TR) nach Patentanspruch 5 oder 6,
**dadurch gekennzeichnet,**
**dass** der RFID-Transponder (TR) zumindest an einer dem Betätigungswerkzeug zuzuwendenden Seite aus ferromagnetischem Material besteht.

8. RFID-Transponder (TR) nach Patentanspruch 7,
**dadurch gekennzeichnet,**
**dass** das ferromagnetische Material derart geformt ist, dass ein von außen auf den RFID-Transponder (TR) einwirkendes magnetisches Wechselfeld zumindest teilweise durch eine im inneren des RFID-Transponders (TR) angeordneten Spule geleitet wird.
